(19) Europäisches Patentamt
European Patent Office
Office européen des brevets

(11) EP 1 186 764 A2

(12) **EUROPEAN PATENT APPLICATION**

(43) Date of publication:
**13.03.2002 Bulletin 2002/11**

(51) Int Cl.[7]: **F02D 41/02**, F01N 3/08, F02D 21/08, F01N 3/20

(21) Application number: **01120430.2**

(22) Date of filing: **27.08.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **07.09.2000 JP 2000270930**

(71) Applicant: **NISSAN MOTOR CO., LTD.**
**Yokohama-shi Kanagawa-ken (JP)**

(72) Inventors:
- **Tayama, Akira**
  **Yokosuka-shi, Kanagawa (JP)**
- **Tsuchida, Hirofumi**
  **Yokosuka-shi, Kanagawa (JP)**
- **Fukuda, Takashi**
  **Yokohama-shi, Kanagawa (JP)**
- **Shiino, Toshikazu**
  **Chigasaki-shi, Kanagawa (JP)**
- **Hotta, Isamu**
  **Yokosuka-shi, Kanagawa (JP)**

(74) Representative: **Grünecker, Kinkeldey,**
**Stockmair & Schwanhäusser Anwaltssozietät**
**Maximilianstrasse 58**
**80538 München (DE)**

# (54) Engine exhaust gas purification device

(57) An upstream catalytic converter (13) and downstream catalytic converter (14) are provided in series in an exhaust passage (12) of an engine (1). The upstream catalytic converter (13) houses a three-way catalyst that becomes active at an activating temperature range between 250 °C and 350 °C, and the downstream catalytic converters (14, 14A, 14B) house a low temperature NOx trapping catalyst which traps moisture and nitrogen oxides in exhaust gas at a temperature lower than an upper limiting temperature, for example, 200 °C. The downstream catalytic converter (14) is separated from the upstream catalytic converter (13) so that the low temperature NOx trapping catalyst has a temperature lower than the upper limiting temperature while the three-way catalyst is in the activating temperature range.

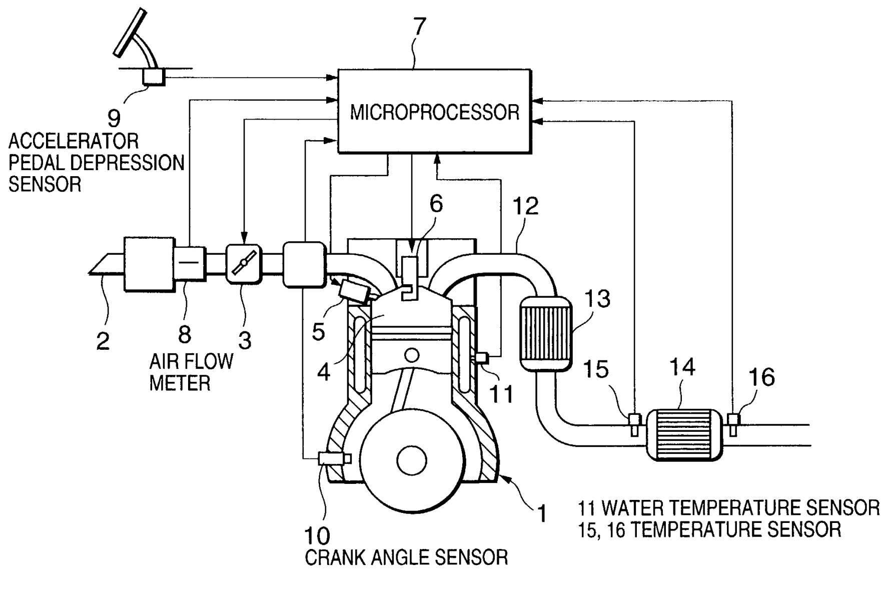


FIG. 2

EP 1 186 764 A2

## Description

FIELD OF THE INVENTION

This invention relates to the purification of nitrogen oxides contained in engine exhaust gas.

BACKGROUND OF THE INVENTION

A three-way catalyst which purifies engine exhaust gas simultaneously reduces nitrogen oxides (NOx) and oxidizes hydrocarbons (HC) and carbon monoxide (CO) when the exhaust gas flowing into the catalyst has a stoichiometric air-fuel ratio.

It is known that the three-way catalyst is not suitable for the exhaust gas purification of a lean-burn engine that operates at a lean air-fuel ratio in order to decrease fuel consumption.

USPat. 5,552,129 discloses a selective reduction type zeolite catalyst for lean-burn engines. This catalyst traps NOx when the engine is operating under a lean air-fuel ratio and reduces the trapped NOx when the engine is operating under a rich air-fuel ratio.

This zeolite catalyst also traps moisture as well as the NOx, and the NOx trapping characteristics of the zeolite catalyst deteriorate as the moisture amount trapped by the catalyst becomes large.

SUMMARY OF THE INVENTION

The inventors of this invention have discovered that the zeolite catalyst has a high NOx trapping capability at low temperatures below 200 °C.

However, high levels of moisture exist in engine exhaust gas at low temperatures, so if the zeolite catalyst is applied for trapping the NOx in a low temperature exhaust gas, the moisture in the exhaust gas must be first removed. Tokkai Hei 1-155934 published by the Japanese Patent Office in 1989 discloses a technique of reducing such moisture by adsorption in a moisture-absorbent material such as silica gel before processing exhaust gas with the zeolite catalyst while in a vehicle tunnel. However, when the catalyst is used for a vehicle-mounted exhaust gas purification device, it is difficult to find a space to dispose such a moisture-absorbent material. Further, the moisture-absorbent material may bring a pressure loss in the engine exhaust gas and increase fuel consumption of the engine.

It is therefore an object of this invention to remove moisture in the zeolite catalyst without using a moisture-absorbent material

In order to achieve the above object, this invention provides an exhaust gas purification device for an engine comprising an exhaust passage discharging exhaust gas from the engine to the atmosphere, and a NOx trapping catalytic converter storing a low temperature NOx trapping catalyst trapping moisture and nitrogen oxides in exhaust gas of a temperature lower than an upper limiting temperature. The converter is disposed in the exhaust passage at a distance from the engine that causes exhaust gas flowing into the converter during operation of the engine under a predetermined condition to be lower than the upper limiting temperature.

The details as well as other features and advantages of this invention are set forth in the remainder of the specification and are shown in the accompanying drawings.

BRIEF DESCRIPTION OF THE DRAWINGS

FIGs. 1A and 1B are diagrams showing exhaust gas temperature and NOx concentration in a NOx trapping catalytic converter with zeolite catalyst according to experiments conducted by the inventors.

FIG. 2 is a schematic diagram of an exhaust gas purification device according to a first embodiment of this invention.

FIG. 3 is a flowchart describing a moisture removal routine for a low temperature NOx trapping catalyst executed by a microprocessor according to the first embodiment of this invention.

FIG. 4 is a schematic diagram of an exhaust gas purification device according to a second embodiment of this invention.

FIG. 5 is a flowchart describing a switching routine for the low temperature NOx trapping catalyst executed by a microprocessor according to the second embodiment of this invention.

FIG. 6 is a flowchart describing a moisture removal routine for the low temperature NOx trapping catalyst executed by a microprocessor according to the second embodiment of this invention.

FIG. 7 is a schematic diagram of an exhaust gas purification device according to a third embodiment of this invention.

FIG. 8 is a flowchart describing a moisture removal routine for the low temperature NOx trapping catalyst executed by a microprocessor according to the third embodiment of this invention.

FIG. 9 is a schematic diagram of an exhaust gas purification device according to a fourth embodiment of this invention.

FIG. 10 is a schematic diagram of an exhaust gas purification device according to a fifth embodiment of this invention.

FIG. 11 is a schematic diagram of an exhaust gas purification device according to a sixth embodiment of this invention.

FIG. 12 is a schematic diagram of an exhaust gas purification device according to a seventh embodiment of this invention.

FIG. 13 is a diagram describing temperature variation of catalysts according to the first embodiment of this invention with respect to time elapsed from engine start-up.

FIGs. 14A and 14B are similar to FIGs. 1A and 1B, but showing characteristics of a low temperature NOx trapping catalyst other than the zeolite catalyst.

DESCRIPTION OF THE PREFERRED EMBODIMENTS

Firstly, referring to FIGs 1A and 1B of the drawings, the results of experiments conducted by the inventors on the characteristics of zeolite catalysts.

These experiments have shown that moisture in exhaust gas is trapped together with NOx when a zeolite catalyst is used to trap nitrogen oxides (NOx) in engine exhaust gas. When the NOx trapping capacity is saturated, the moisture trapping capacity is also saturated. A zeolite catalyst performs approximately simultaneous trapping of NOx and moisture. A zeolite catalyst displays a high NOx trapping ratio of greater than or equal to 99% even when high levels of moisture are present in exhaust gas.

The inventors disposed a zeolite catalytic converter in the engine exhaust passage and measured variations in temperature and nitrogen oxide (NOx) concentration at the inlet and outlet of the converter for both dry catalysts and catalysts with trapped moisture (hereafter referred to as "wet catalysts"). The results are shown in FIG. 1A and demonstrate that even when equal concentrations of NOx are applied to the converter inlet, dry catalysts and wet catalysts display conspicuous differences with respect to NOx concentration at the catalyst outlet.

Since a wet zeolite catalyst displays reduced NOx trapping characteristics, the NOx concentration at the outlet of the converter with a wet zeolite catalyst follows increases in the NOx concentration at the converter inlet with only a slight time lag. In contrast, since a dry catalyst displays high NOx trapping characteristics, there is a large time lag before an increase in the NOx concentration at the inlet of the converter with a dry catalyst results in a corresponding increase at the outlet as shown at point A in the figure.

Furthermore the temperature at the outlet of the converter with a dry zeolite catalyst is considerably higher than the temperature at the inlet of the converter as a result of the heat of condensation and adsorption produced when moisture in the exhaust gas is trapped on the catalyst. After the moisture-trapping capacity of the catalyst becomes saturated at point A, the outlet temperature is reduced since heat of condensation and adsorption is no longer produced and the NOx trapping capacity also becomes saturated. At the same time, the NOx concentration at the outlet of the converter with a dry catalyst begins to increase as shown in FIG. 1A.

A wet catalyst traps low amounts of NOx and displays only small temperature increases at the converter outlet over time.

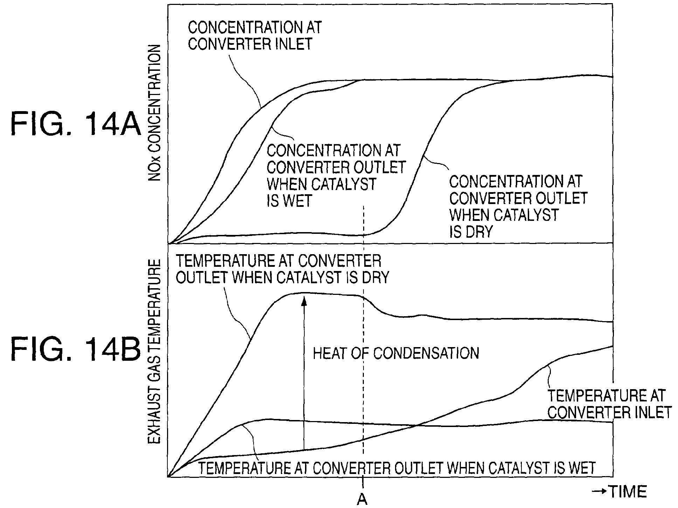

Further, the inventors carried an experiment on a catalyst consisting of noble metal and ceria ($CeO_2$) which supports noble metal. The catalyst is processed into powder and coated on a substrate made of ceramic material. The inventors have found that a converter storing this catalyst has [a] similar characteristics to the zeolite catalytic converter in view of NOx trapping ability in low temperature as shown in FIGs. 14A and 14B. This type of catalyst and the aforesaid zeolite catalyst are hereinafter referred to as a low temperature NOx trapping catalyst.

The exhaust gas purification device according to this invention is based on the above discoveries.

Referring now to FIG. 2 of the drawings, an exhaust gas purification device according to this invention is provided with an upstream catalytic converter 13 provided in an exhaust passage 12 of a gasoline engine 1, a downstream catalytic converter 14 provided in the exhaust passage 12 downstream of the catalyst 13.

The engine 1 is provided with an intake passage 2. An electronic throttle 3 which regulates an intake air amount is provided in the intake passage 2. The engine 1 is also provided with a combustion chamber 4, a fuel injector 5 that injects fuel into the combustion chamber 4 and a spark plug 6 that ignites fuel in the combustion chamber 4. The fuel injector 5 may be provided in an intake port connecting the intake passage 2 and the combustion chamber 4.

The engine 1 generates an air-fuel mixture in the combustion chamber 4 by injecting fuel from the fuel injector 5 into air entering from the intake passage 2 through the electronic throttle 3. The air-fuel mixture is combusted by ignition by the spark plug 6.

The opening of the electronic throttle 3, the fuel injection amount of the fuel injector 5 and the ignition timing of the spark plug 6 are controlled by respective signals output from a microprocessor 7.

The following signals are input into the microprocessor 7 for this control: an intake air flow amount *Qa* in the intake passage 2 detected by an air flow meter 8, a vehicle accelerator pedal depression amount *Apo* detected by an accelerator depression sensor 9, a rotation speed *Ne* of the engine 1 detected by a crank angle sensor 10 and an engine cooling water temperature *Tw* detected by a water temperature sensor 11.

The microprocessor 7 is provided with a central processing unit (CPU), a read only memory (ROM), a random access memory (RAM) and an input/output interface (I/O interface).

The microprocessor 7 uses the engine rotation speed *Ne*, the accelerator pedal depression amount *Apo* and the engine cooling water temperature *Tw* to calculate a required torque *TT* for the engine 1 and controls the opening of the electronic throttle 3 in order to obtain an air amount required to generate the required torque *TT.* The fuel injection amount and the injection timing of the fuel injector 5 are calculated from the intake air amount *Qa*, the engine rotation speed *Ne* and the required torque *TT*. A pulse width modulation signal corresponding to the calculated fuel injection amount is output to the fuel injector 5 in response to the injection timing. Furthermore the ignition timing is set based on the engine rotation speed *Ne* and the required torque *TT* and an ignition signal is output to the spark plug at the set timing.

A three-way catalyst is stored in the upstream catalytic converter 13. The three-way catalyst comprises a precious metal such as platinum (Pt), palladium (Pd) or rhodium (Rh) coated together with alumina onto a honeycomb substrate. The three-way catalyst has the function of purifying exhaust gas by oxidizing hydrocarbons (HC) and carbon monoxide (CO) and reducing nitrogen oxides (NOx) in the exhaust gas when the air-fuel ratio of the air-fuel mixture combusted in the engine 1 has a stoichiometric air-fuel ratio.

A low temperature NOx trapping catalyst is stored in the downstream converter 14. The low temperature NOx trapping catalyst comprises, for example, a zeolite catalyst having a zeolite coated on a honeycomb substrate. The zeolite may comprise ferrierite, mordenite, USY, ZSM-5, X-zeolite, Y-zeolite, A-zeolite and b-zeolite which can trap NOx at low temperatures. A precious metal such as platinum (Pt), palladium (Pd) or rhodium (Rh) is coated over the zeolite together with alumina. The zeolite catalyst has the function of trapping NOx and moisture and also trapping hydrocarbons (HC) at low catalyst temperatures. When the catalyst temperature increases, the trapped NOx and HC are oxidized or reduced by catalyst action and converted to non-toxic $N_2$, $CO_2$, $H_2O$.

The other type of low temperature NOx trapping catalyst such as the one described hereinbefore may be used instead of the zeolite catalyst.

The activation temperature of the three-way catalyst applied to the upstream catalytic converter 13 is normally between 250 °C and 350 °C. On the other hand, the upper limit of the temperature range at which the low temperature NOx trapping catalyst applied to the downstream catalytic converter 14 can trap NOx is approximately 200 °C. As a result, this exhaust gas purification device is adapted so that the temperature of the low temperature NOx trapping catalyst does not exceed 200 °C until the three-way catalyst reaches an activation temperature. The temperature of the exhaust gas decreases as it passes downstream in the exhaust passage 12, that is to say, as it is distanced from the engine 1. On this basis, the position of the downstream catalytic converter 14 in the exhaust passage 12 is determined by calculation or experiment.

Referring now to FIG. 13, the temperature of the three-way catalyst in the upstream catalytic converter 13 increases over time after starting the engine 1 as shown by a solid line A in the figure. The temperature of the low temperature NOx trapping catalyst in the downstream catalytic converter 14 increases with a time lag as shown by a solid line B in the figure. In this diagram, the region in which NOx can be trapped by the low temperature NOx trapping catalyst overlaps with the region in which exhaust gas can be purified by the three-way catalyst. In the same manner as when a vehicle operates for a long time at extremely low loads at extremely low temperatures, the low temperature NOx trapping catalyst begins to trap NOx when the exhaust gas temperature of the exhaust passage 12 is reduced and before the temperature of the three-way catalyst falls below levels at which exhaust gas purification is no longer possible. This type of combination allows preferred exhaust gas compositions in all operational ranges of the engine 1. The combination above depends on the setting of the distance between the upstream catalytic converter 13 and the downstream catalytic converter 14.

When the upstream catalytic converter 13 is near the downstream catalytic converter 14, temperature decreases of the exhaust gas in the exhaust passage 12 are reduced and the low temperature NOx trapping catalyst follows a temperature increase curve as shown by a broken line C in the figure. In this case, before the three-way catalyst reaches an activation state at which exhaust gas purification is enabled, the temperature of the low temperature NOx trapping catalyst exceeds the temperature region at which NOx can be trapped. Thus the distance between the upstream catalytic converter 13 and the downstream catalytic converter 14 is determined by experiment or simulation so that the region in which the low temperature NOx trapping catalyst can trap NOx is overlaps with the region in which the three-way catalyst can purify exhaust gas.

Although the upstream catalytic converter 13 stores the three-way catalyst in this embodiment, it is possible to use a lean NOx catalyst, a selective reduction type NOx catalyst or an HC absorbing catalyst instead of the three-way catalyst. Alternatively, a converter storing these catalysts may be disposed between the upstream catalytic converter 13 and the downstream catalytic converter 14. An NOx trapping function at lean air-fuel ratio environments may further be created by a mixture of known NOx trapping materials such as barium (Ba) and cesium (Cs) which are mixed and coated on the zeolite in order to form the low temperature NOx trapping catalyst of the downstream catalytic converter 14.

Temperature sensors 15, 16 are provided at the inlet and outlet of the downstream catalytic converter 14. The inlet temperature *Tin* of the downstream catalytic converter 14 detected by the temperature sensor 15 and the outlet temperature *Tout* of the downstream catalytic converter 14 detected by the temperature sensor 16 are input as respective signals to the microprocessor 7.

As stated above, the NOx trapping function of the low temperature NOx trapping catalyst becomes saturated at the same time as trapped moisture saturates the moisture trapping function. As a result, NOx above that amount can not be trapped. This exhaust gas purification device has the object of removing moisture from wet low temperature NOx trapping catalysts by controlling the air-fuel ratio and the ignition timing of the air-fuel mixture combusted in the combustion chamber 4.

A moisture removal routine executed by the microprocessor 7 will be described below with reference to FIG. 3. This routine is executed at one-second intervals while the engine 1 is operating.

Firstly in a step S1, the microprocessor 7 determines whether or not a moisture removal required flag *FDS* has a value of zero. The moisture removal required flag *FDS* has a value of zero or one and an initial value of zero. In subsequent steps, the flag is firstly set to a value of one when it is determined that moisture removal is required. When *FDS* has a value of zero, the routine proceeds to a step S2 and when *FDS* has a value of one, the routine proceeds to a step S7.

In the step S2, the intake airflow amount *Qa*, and inlet temperature *Tin* and outlet temperature *Tout* of the downstream catalytic converter 14 are read.

In a step S3, it is determined whether or not the inlet temperature *Tin* is lower than a predetermined temperature *TA*. The predetermined temperature *TA* is set to 200 °C for example. When the inlet temperature *Tin* is lower than a predetermined temperature *TA*, the low temperature NOx trapping catalyst in the downstream catalytic converter 14 can trap moisture in the exhaust gas. In this case, the routine proceeds to a step S4. On the other hand, when the inlet temperature *Tin* is greater than or equal to the predetermined temperature *TA*, the low temperature NOx trapping catalyst can not trap moisture. In this case, the routine is terminated without proceeding to subsequent steps.

In a step S4, a moisture trapping amount *W* of the low temperature NOx trapping catalyst is calculated by Equation (1) from the inlet temperature *Tin*, the outlet temperature *Tout* and a mass flow amount *Qe*(g/sec) of exhaust gas.

$$W=\frac{\sum\{(Tout-Tin)\cdot(Qe\cdot Mex+Mcat)\}}{Mk} \qquad (1)$$

Where,

*Mex*= heat capacity per unit mass of exhaust gas ((cal/K)/g),

*Mcat* = heat capacity of the low temperature NOx trapping catalyst (cal/K), and

*Mk* = heat of condensation and adsorption per unit mass of water vapor (cal/g).

The mass flow amount of exhaust gas *Qe* is calculated by adding the fuel injection amount (g/sec) per unit time to the mass flow amount of intake air *Qa*. It is possible to substitute the mass flow amount of intake air *Qa*(g/sec) for the mass flow amount of exhaust gas *Qe* in order to simplify the calculation. The heat capacity *Mex* per unit mass of exhaust gas is a value determined in response to the composition of the exhaust gas of the engine 1, that is to say, in response to the air-fuel ratio of the air-fuel mixture combusted by the engine 1 or may be set as a constant in order to simplify the calculation. The heat capacity *Mcat* of the low temperature NOx trapping catalyst is a constant which is determined by the size of the low temperature NOx trapping catalyst. Both *Mex* and *Mcat* may be calculated beforehand or may be set on the basis of experiment.

Next in a step S5, it is determined whether or not the moisture trapping amount *W* is greater than or equal to a predetermined amount *TB*. The predetermined value *TB* is set for example to 90% of the maximum moisture trapping amount of the low temperature NOx trapping catalyst. When the moisture trapping amount *W* is greater than or equal to the predetermined value *TB,* it is determined that it is required to perform a moisture removal process on the low temperature NOx trapping catalyst. In this case, the routine proceeds to a step S6, and the moisture removal required flag *FDS* is set to a value of one. On the other hand, when the moisture trapping amount *W* does not reach the predetermined value *TB,* the routine is terminated without proceeding to subsequent steps.

In the step S6, after the moisture removal required flag *FDS* is set to a value of one or when the moisture removal required flag *FDS* had a value of one in the step S1 above, the routine executes steps after the step S7.

In the step S7, the microprocessor 7 increases the exhaust gas temperature by retarding the ignition timing *ADV* of the spark plug 6 from a normal timing by a predetermined amount R in order to remove moisture trapped in the low temperature NOx trapping catalyst.

Next in a step S8, it is determined whether or not the outlet temperature *Tout* is greater than or equal to a predetermined temperature *TC.* The predetermined temperature *TC* is the temperature required for removing moisture from the low temperature NOx trapping catalyst and is set for example to 300 °C. When the outlet temperature *Tout* does not reach the predetermined temperature *TC,* the routine is terminated without proceeding to subsequent steps.

On the other hand, when the outlet temperature *Tout* reaches the predetermined temperature *TC,* the routine proceeds to a step S9.

In the step S9, the timer value *T* is incremented and the routine proceeds to a step S10. The timer has an initial value of zero.

In the step S10, a target equivalence ratio *TFBYA* is set to a value *TFBYAL* that corresponds to a lean air-fuel ratio. Herein, the target equivalence ratio is defined as the ratio of a target fuel to air ratio divided by the stoichiometric fuel to air ratio. The concentration of moisture contained in the exhaust gas is reduced and removal of moisture from the low temperature NOx trapping catalyst is promoted as the microprocessor 7 controls the fuel injection amount of the fuel injector 5 based on the lean air-fuel ratio corresponding value *TFBYAL*.

Next in a step S11, it is determined whether or not the timer value *T* has reached a predetermined time *TD.* When the timer value *T* has not reached the predetermined time *TD,* it is determined that moisture removal from the low temperature NOx trapping catalyst is not complete and the routine is terminated. On the other hand, when the timer value *T* reaches the predetermined time *TD,* it is determined that moisture removal from the low temperature NOx trapping catalyst is complete and the moisture removal required flag *FDS* is reset to a value of zero. The timer value *T* is also reset to zero and the routine is terminated.

The routine above performs a temperature increase operation on the exhaust gas by retarding the ignition timing of the spark plug 6 when the inlet temperature *Tin* of the downstream catalytic converter 14 has a temperature which is lower than the predetermined temperature *TA* and the moisture trapping amount *W* of the low temperature NOx trapping catalyst has reached the predetermined amount *TB.* When the outlet temperature *Tout* of the downstream catalytic converter 14 exceeds the predetermined temperature *TC* required for removal of moisture from the low temperature NOx trapping catalyst, a count of the timer value is started. At the same time, the air-fuel ratio is switched to a lean value and moisture in the exhaust gas is reduced. The moisture removal process from the low temperature NOx trapping catalyst is completed when the above state continues for the predetermined time *TD.*

At completion, NOx trapped together with moisture in the low temperature NOx trapping catalyst is released and reduced by the action of precious metals coated on the upper layer of the low temperature NOx trapping catalyst. In this manner, release of NOx and moisture from the low temperature NOx trapping catalyst is realized.

Next a second embodiment of this invention will be described with reference to FIGs. 4 - 6.

Firstly with reference to FIG. 4, the downstream catalytic converter14 is disposed in the exhaust passage 12 at a position further downstream than that in the first embodiment. In this embodiment, the distance between the upstream catalytic converter 13 and the downstream catalytic converter 14 is set so that the low temperature NOx trapping catalyst is normally less than or equal to the upper limiting temperature for NOx trapping not only when the three-way catalyst is inactive, but also under all temperature conditions for normal operation of the engine 1. That is to say, after warm-up of the engine 1 is completed, even when the engine 1 is operating at maximum load, the zeolite temperature is adapted so that the upper limiting temperature for NOx trapping is not exceeded as shown by the dotted line D in FIG. 13.

Furthermore gas flow in the exhaust passage 12 is divided into branches 12A and 12B and the downstream catalytic converter 14 comprises two units 14A and 14B respectively provided in the branches 12A and 12B. Furthermore a switching valve 17 which switches the branches 12A and 12B is provided upstream in the exhaust passage 12. The branches 12A and 12B join together downstream of the units 14A and 14B.

The units 14A and 14B house heaters 40A and 40B which electrically heat the catalyst. Current to the heaters 40A and 40B is supplied from a battery 18 through power transistors 19A and 19B. The power transistors 19A and 19B are controlled by signals output from the microprocessor 7.

Exhaust gas recirculation (EGR) passages 20A and 20B are connected to the branches 12A and 12B downstream of the units 14A and 14B. The EGR passages 20A and 20B join together partway to form an EGR passage 20. The EGR passage 20 is connected to the intake passage 2 between the airflow meter 8 and the electronic throttle 3. EGR valves 21A and 21B are provided in the EGR passages 20A and 20B in order to regulate the exhaust gas recirculation amount. The EGR valves 21A and 21B are controlled by signals output from the microprocessor 7.

The units 14A and 14B are selectively operated according to the selection position of the switching valves 17. The heaters 40A and 40B are used when exhaust gas is not introduced into the units 14A and 14B. When the low temperature NOx trapping catalyst of the unit 14A (14B) is heated to greater than or equal to a required temperature for NOx/moisture release by the heater 40A (40B), NOx and moisture are released from the low temperature NOx trapping catalyst. At this time, the corresponding EGR valve 21A (21B) is opened. Released NOx is recirculated in the intake air through the EGR valve 21A (21B) due to the negative pressure of the intake passage 2 and is reduced by the three -way catalyst of the upstream catalytic converter 13 which has reached the activation temperature.

On the other hand, exhaust gas is discharged to the atmosphere through the downstream branch 12B (12A) from the opposite unit 14B (14A). As a result, the confluence of the branch 12A and 12B is at a slightly higher pressure than atmospheric pressure and a slight pressure differential is generated between the confluence and the branch 12A (12B). This pressure differential plays the role of preventing NOx discharged from the low temperature NOx trapping catalyst of the unit 14A (14B) from being discharged into the atmosphere. If a switching valve similar to the switching valve 17 is further provided at the confluence of the branches 12A and 12B, the prevention of discharge of NOx released from the low temperature NOx trapping catalyst is further ensured. In this embodiment, since the low temperature NOx trapping catalyst is heated when exhaust gas is not flowing in the unit 14B (14A), only a small amount of power is consumed by the battery 18 for heating.

Referring now to FIG. 5, a switching routine for the units 14A and 14B executed by the microprocessor 7 in this embodiment will be described. This routine is performed at one-second intervals while the engine 1 is operating.

Firstly in a step S21, it is determined whether or not the unit 14A can trap moisture. This determination is performed by determining whether or not a moisture removal required flag *FDS1* has a value of zero. Although the setting of the moisture removal required flag *FDS1 will* be described below, moisture can be trapped when the moisture removal required flag *FDS1* has a value of zero. When the moisture removal required flag *FDS1* has a value of zero, the routine proceeds to a step S22. When the moisture removal required flag *FDS1* does not have a value of zero, the routine proceeds to a step S26.

In the step S22, the switching valve 17 is operated and the exhaust gas in the exhaust passage 12 is introduced into the unit 14A. Since the units 14A and 14B are normally maintained at a temperature which allows trapping during normal operation of the engine 1, as long as there is a allowance in the moisture trapping capacity, moisture is normally trapped from the introduced exhaust gas.

Next in a step S23, a moisture amount *W1* trapped by the low temperature NOx trapping catalyst in the unit 14A is calculated. As the total moisture in the exhaust gas led to the unit 14A is assumed to be trapped in the low temperature NOx trapping catalyst of the unit 14A, the moisture amount *W1* is calculated from the exhaust gas amount and the moisture concentration in the exhaust gas. Here the exhaust gas amount can be taken to be equal to the intake air amount *Qa*. The moisture concentration in the exhaust gas is calculated by looking up a map pre-stored in the microprocessor 7 on the basis of the target equivalence ratio *TFBYA* of the air-fuel mixture supplied to the engine 1.

In a step S24, the moisture amount *W1* is compared to a predetermined value *WE*. The predetermined value *WE* is a pre -set value based on maximum moisture amount which can be trapped by the low temperature NOx trapping catalyst and herein is set to 50% of the maximum moisture amount. If the moisture amount *W1* reaches the predetermined value *WE*, the moisture removal required flag *FDS1 is* set to a value of one in a step S25 so that the exhaust gas is no longer introduced into the unit 14A and the routine is terminated.

If the moisture amount *W1* does not reach the predetermined value *WE*, the routine is immediately terminated without proceeding to the step S25.

In the step S26, the microprocessor 7 determines whether or not the unit 14B can trap moisture. This determination is performed by determining whether or not the moisture removal required flag *FDS2* has a value of zero. Although the setting of a moisture removal required flag *FDS2* will be described below, moisture can be trapped when the moisture removal required flag *FDS2* has a value of zero.

When the moisture removal required flag *FDS2* has a value of zero, the routine proceeds to a step S27. When the moisture removal required flag *FDS2* does not have a value of zero, the routine proceeds to a step S31. In the step S31, after the switching valve 17 is operated and exhaust gas in the exhaust passage 12 is introduced to the unit 14B, the routine is terminated. Even when the units 14A and 14B can not trap moisture, it is necessary to introduce exhaust gas into one of the units. In this case, the unit 14B is used while waiting for the moisture removal of the low temperature NOx trapping catalyst in the unit 14A to be completed.

In the step S27,the microprocessor 7 operates the switching valve 17 to introduce exhaust gas in the exhaust passage 12 into the unit 14B, and then the routine proceeds to a step S28.

In the step S28, a moisture amount trapped by the low temperature NOx trapping catalyst in the unit 14B is calculated. As the total moisture in the exhaust gas led to the unit 14B is assumed to be absorbed in the low temperature NOx trapping catalyst of the unit 14B, the moisture amount *W2* is calculated from the moisture concentration in the exhaust gas and the exhaust gas amount. Here the exhaust gas amount can be taken to be equal to the intake air amount *Qa*. The moisture concentration in the exhaust gas is calculated by looking up the map pre-stored in the microprocessor 7 on the basis of the target equivalence ratio *TFBYA* of the air-fuel mixture supplied to the engine 1.

In a step S29, the moisture amount *W2* is compared to the predetermined value *WE*. The predetermined value *WE* is a pre-set value based on maximum moisture amount which can be trapped by the low temperature NOx trapping catalyst and herein is set to 50% of the maximum moisture amount. If the moisture amount *W2* reaches the predetermined value *WE*, the moisture removal required flag *FDS2* is set to a value of one in a step S30 so that the exhaust gas is no longer introduced into the unit 14B and the routine is terminated.

If the moisture amount *W2* does not reach the predetermined value *WE*, the routine is immediately terminated without proceeding to the step S30.

In this manner, the microprocessor 7 selectively uses the units 14A and 14B in response to the amount of moisture trapped in the low temperature NOx trapping catalyst.

On the other hand, the microprocessor 7 performs removal of moisture from the low temperature NOx trapping catalyst which has trapped moisture by executing the moisture removal routine shown in FIG. 6. This routine is performed at intervals of one second during operation of the engine 1.

Referring now to FIG. 6, firstly in a step S41, the microprocessor 7 determines whether or not the moisture removal required flag *FDS1* has a value of one. When the moisture removal required flag *FDS1* has a value of one, the process in steps S42 - S46 is performed and moisture in the low temperature NOx trapping catalyst of the unit 14A is removed.

When the moisture removal required flag *FDS1* does not have a value of one, in a step S47, the microprocessor 7 determines whether or not the moisture removal required flag *FDS2* has a value of one. When the moisture removal required flag *FDS2* has a value of one, the process in steps S48 - S52 is performed and moisture in the low temperature NOx trapping catalyst of the unit 14B is removed. When the moisture removal required flag *FDS2* does not have a value of one, since it is not necessary to perform a moisture removal process on the low temperature NOx trapping catalyst of either unit 14A or 14B, the routine is immediately terminated without proceeding to further steps. Next, the process in steps S42 - S48 will be described.

In the step S42, the microprocessor 7 turns on the power transistor 19Aand applies a current from the battery 18 to the heater 40A in order to heat the unit 14A.

Next in the step S43, the EGR valve 21A is opened.

NOx and moisture which are released from the low temperature NOx trapping catalyst of the unit 14A as a result of heating are recirculated to the intake passage 2 of the engine 1 through the EGR valve 21A. The mixture of NOx and moisture released from the low temperature NOx trapping catalyst of the unit 14A which flows in the exhaust passage 12 is stopped by the exhaust gas pressure in the branch 12B.

Next in the step S44, the microprocessor 7 increments the timer value *TK.*

Then in the step S45, the timer value *TK* is compared with a predetermined time *TF.* The predetermined time *TF* corresponds to the time required to remove moisture from the low temperature NOx trapping catalyst by heating.

When the timer value *TK* reaches the predetermined time *TF,* in the step S46, the moisture removal required flag *FSD1* and the timer value *TK* are respectively reset to zero and the routine is terminated. When the timer value *TK* does not reach the predetermined time *TF,* the routine skips the step S46 and is terminated.

Next, the process in steps S48 - S52 will be described.

In the step S48, the microprocessor 7 turns on the power transistor 19Band applies a current from the battery 18 to the heater 40B in order to heat the unit 14B.

Next in the step S49, the EGR valve 21B is opened.

NOx and moisture which are released from the low temperature NOx trapping catalyst of the unit 14B as a result of heating are recirculated to the intake passage 2 of the engine 1 through the EGR valve 21B. The mixture of NOx and moisture released from the low temperature NOx trapping catalyst of the unit 14B which flows in the exhaust passage 12 is stopped by the exhaust gas pressure in the branch 12A.

Next in the step S50, the microprocessor 7 increments the timer value *TK.*

Then in the step S51, the timer value *TK* is compared with the predetermined time *TF.* When the timer value *TK reaches* the predetermined time *TF,* in a step S52, the moisture removal required flag *FSD2* and the timer value *TK* are respectively reset to zero and the routine is terminated. When the timer value *TK* does not reach the predetermined time *TF,* the routine skips the step S52 and is terminated.

A third embodiment of this invention will be described below with reference to FIGs. 7 and 8.

In this embodiment, an increase in the temperature of the exhaust gas for removing moisture in the low temperature NOx trapping catalyst is realized by activating catalytic reactions in the three-way catalyst of the upstream catalytic converter 13. As shown in FIG. 7, this embodiment adds a secondary air supply pump 22 and a secondary air supply passage 23 to the hardware used in the first embodiment. The secondary air supply passage 23 is connected to the exhaust passage 12 upstream of the upstream catalytic converter 13 and supplies secondary air to the exhaust passage 12 by operation of the secondary air supply pump 22.

In this embodiment, when it is necessary to remove moisture from the low temperature NOx trapping catalyst in the downstream catalytic converter 14, the equivalence ratio of the air-fuel mixture combusted in the engine 1 is set to a rich value and combustible components such as carbon monoxide (CO), hydrogen (H2) and hydrocarbons (HC) in the exhaust gas discharged from the engine 1 are increased. Furthermore secondary air is supplied to the exhaust passage 12 from the secondary air supply passage 23. The combustible components and the secondary air result in catalytic combustion in the three-way catalyst in the upstream catalytic converter 13 and thus increase the temperature of the exhaust gas.

A moisture removal routine for the low temperature NOx trapping catalyst executed by the microprocessor 7 in this embodiment will be described below with reference to FIG. 8. This routine is executed at one-second intervals while the engine 1 is operating.

Firstly the microprocessor 7 executes the same process as steps S1-S6 in the first embodiment. When it is determined that moisture removal is required in the low temperature NOx trapping catalyst, the process in steps S61 - S66 are executed.

In the step S61, the target equivalence ratio *TFBYA* is set to a rich equivalence ratio *TFBYR.* The use of a rich equivalence ratio increases combustible components such as CO, H2, HC in the exhaust gas.

In the step S62, the secondary air supply pump 22 is operated and secondary air is supplied to the exhaust passage 12. The combustible components and the secondary air result in catalytic combustion in the three-way catalyst of the upstream catalytic converter 13 and thus increase the temperature of the exhaust gas.

In the step S63, the outlet temperature *Tout* of the downstream catalytic converter 14 which is detected by the temperature sensor 16 is compared with the predetermined temperature *TC.* The predetermined temperature *TC* is set to 300 °C in the same manner as the first embodiment.

When the outlet temperature *Tout* reaches the predetermined temperature *TC,* the timer value *T* is incremented in the step S64.

In the step S65, the timer value *T* is compared with the predetermined time *TD.* If the timer value *T* has reached the predetermined time *TD,* the moisture removal required flag *FDS* is reset to zero in the step S66, the timer value *T* is reset to zero and the routine is terminated. In the step S63, when the outlet temperature *Tout* has not reached the predetermined temperature *TC,* or when the timer value *T* has not reached the predetermined time *TD* in the step S65, subsequent steps are skipped and the routine is terminated.

Apart from the method described above, various means are possible in order to supply combustible components and air to the upstream catalytic converter 13.

In a direct injection engine, after the main combustion at a lean equivalence ratio, it is possible to supply combustible components to the upstream catalytic converter 13 by performing another fuel injection during an expansion stroke or an exhaust stroke of the engine 1. In an engine provided with a multi-point injection device which can vary the equivalence ratio in each cylinder, combustible components in the exhaust gas are increased by supplying an air-fuel mixture with a rich equivalence ratio to one of the cylinders. On the other hand, it is possible to supply air in the exhaust gas by supplying an air-fuel mixture with a lean equivalence ratio to another one of the cylinders.

A fourth embodiment of this invention will be described below with reference to FIG. 9.

This embodiment realizes increases in the temperature of exhaust gas in order to remove moisture in the low temperature NOx trapping catalyst by supplying heated secondary air to the downstream catalytic converter 14.

This embodiment adds a pump 24, a heater 26 and a secondary air supply passage 25 to the hardware used in the first embodiment. When it is necessary to remove moisture from the low temperature NOx trapping catalyst in the downstream catalytic converter 14, the low temperature NOx trapping catalyst is heated and the moisture concentration in the exhaust gas is reduced by supplying high temperature air heated by the heater 26 to the downstream catalytic converter 14 from the secondary air supply passage 25. As a result, moisture trapped in the low temperature NOx trapping catalyst is removed.

A fifth embodiment of this invention will be described below with reference to FIG. 10.

This embodiment supplies dry air to the downstream catalytic converters 14A and 14B instead of using heaters 40A and 40B which directly heat the low temperature NOx trapping catalyst as in the second embodiment.

For this purpose, dried high -temperature air is generated by using a secondary air supply pump 27, a dryer 28 and a heater 29 which dries the secondary air. The dried high-temperature air is supplied selectively to the downstream catalytic converters 14A and 14B by a secondary air supply passage 30A provided with a solenoid valve 31A and a secondary air supply passage 30B provided with a solenoid valve 31B. The dried high-temperature air heats the low temperature NOx trapping catalyst and reduces the moisture concentration of the exhaust gas. As a result, moisture trapped in the low temperature NOx trapping catalyst is removed.

In this embodiment, after the moisture is removed from the low temperature NOx trapping catalyst, it is possible to rapidly reduce the temperature of the low temperature NOx trapping catalyst by stopping the heater 29 and supplying low-temperature secondary air to the downstream catalytic converter 14A (14B). An alternative to this embodiment is to eliminate the heater 29 and supply dried air to the downstream catalytic converter 14A (14B) without heating. Dried air, even if not heated, will still have the effect to accelerate the release of moisture from the low temperature NOx trapping catalyst.

A sixth embodiment of this invention will be described below with reference to FIG. 11.

This embodiment omits the downstream catalytic converter 14B, the EGR passage 20A and the EGR valve 21A from the second embodiment.

After warming-up the engine 1, when the upstream catalytic converter 13 is in a state allowing reduction of NOx, a downstream catalytic converter 14 storing a low temperature NOx trapping catalyst is not required. Thus in this embodiment, a bypass passage 32 and the switching valve 17 are provided in order to bypass the downstream catalytic converter 14.

Removal of moisture from the low temperature NOx trapping catalyst in the downstream catalytic converter 14 is performed using a heater 40 in the same manner as the heater 40A in the second embodiment.

The microprocessor 7 in this embodiment controls the switching valve 17 so that exhaust gas flowing out of the upstream catalytic converter 13 flows into the downstream catalytic converter 14 after engine 1 startup until the three-way catalyst of the upstream catalytic converter 13 is activated.

After the three-way catalyst of the upstream catalytic converter 13 is activated, the switching valve 17 is switched and exhaust gas flowing out from the upstream catalytic converter 13 is discharged through the bypass passage 32. At the same time, the inverter 19 is controlled and a current is applied to the heater 40 from the battery 18 in order to heat the low temperature NOx trapping catalyst in the downstream catalytic converter 14 and remove NOx and moisture from the low temperature NOx trapping catalyst. Water vapor and NOx released from the low temperature NOx trapping catalyst is recirculated to the intake passage 3 from the EGR passage 20 through the EGR valve 21.

Since the exhaust gas pressure at the confluence of the exhaust passage 12 and the bypass passage 32 is slightly higher than atmospheric pressure, NOx and water vapor released from the low temperature NOx trapping catalyst is not discharged to the outside. Since the low temperature NOx trapping catalyst is heated without exhaust gas flowing in the downstream catalytic converter 14, only a small amount of power is consumed by the heater 40.

A seventh embodiment of this invention will be described below with reference to FIG. 12.

In this embodiment, dried high-temperature air is generated and supplied to the downstream catalytic converter 14 from the secondary air supply passage 30 using the secondary air supply pump 27, the drier 28 and heater 29 used in the fifth embodiment instead of the heater 40, inverter 19 and battery 18 of the sixth embodiment. In other respects, the structure is the same as that described with reference to the sixth embodiment.

In this embodiment, after moisture and NOx are removed from the low temperature NOx trapping catalyst, by supplying low temperature secondary air without heating by the drier 28 to the downstream catalytic converter 14, it is possible to rapidly reduce the temperature of the low temperature NOx trapping catalyst.

When the bypass passage 32 is provided as in the sixth and seventh embodiments, the switching valve 17 may be controlled so that the downstream catalytic converter 14 is only used when the engine 1 is cold started. In this case, immediately after the engine 1 is warmed up, the switching valve 17 is switched so that exhaust gas flows down the bypass passage 32.

The switching valve 17 maintains this position until vehicle operation is completed. The low temperature NOx trapping catalyst in the downstream catalytic converter 14 is kept in a state where it has trapped moisture and NOx.

Immediately after the vehicle ignition key is turned off, the low temperature NOx trapping catalyst is heated in order to remove the trapped moisture and NOx. Since the low temperature NOx trapping catalyst is heated when the engine 1 is not operating, it is possible to suppress heat escaping from exhaust gas and thus suppress power consumption required for heating.

The contents of Tokugan 2000-270930, with a filing date of September 7, 2000 in Japan, are hereby incorporated by reference.

Although the invention has been described above by reference to certain embodiments of the invention, the invention is not limited to the embodiments described above. Modifications and variations of the embodiments described above will occur to those skilled in the art, in light of the above teachings.

The embodiments of this invention in which an exclusive property or privilege is claimed are defined as follows:

**Claims**

1. An exhaust gas purification device for an engine (1) comprising:

   an exhaust passage (12) discharging exhaust gas from the engine (1) to the atmosphere; and a nitrogen oxides trapping catalytic converter (14, 14A, 14B) storing a low temperature nitrogen oxides trapping catalyst trapping moisture and nitrogen oxides in exhaust gas of a temperature lower than an upper limiting temperature, the converter (14, 14A, 14B) being disposed in the exhaust passage (12) at a distance from the engine (1) that causes exhaust gas flowing into the nitrogen oxides trapping catalytic converter (14, 14A, 14B) during operation of the engine (1) under a predetermined condition to be lower than the upper limiting temperature.

2. The exhaust gas purification device as defined in Claim 1, wherein the exhaust gas purification device further comprises a second catalytic converter (13) storing an exhaust gas purification catalyst which purifies exhaust gas in a predetermined temperature region higher than the upper limiting temperature, the second catalytic converter (13) being disposed in the exhaust passage (12) between the nitrogen oxides trapping catalytic converter (14, 14A, 14B) and the engine (1),the distance between the second catalytic converter (13) and the nitrogen oxides trapping catalytic converter (14, 14A, 14B) being set to a distance at which a temperature of the low temperature nitrogen oxides trapping catalyst is lower than the upper limiting temperature when a temperature of the exhaust gas purification catalyst is in the predetermined temperature region.

3. The exhaust gas purification device as defined in Claim 1 or Claim 2, wherein the device further comprises a mechanism (5, 6, 19, 19A, 19B, 22, 23, 24, 25, 26, 27, 28, 29, 30, 30A, 30B, 40A, 40B) which removes moisture from the low temperature nitrogen oxides trapping catalyst.

4. The exhaust gas purification device as defined in Claim 3, wherein the device further comprises a sensor (8, 15, 16) which detects an operational condition of the engine (1); and a controller (7) functioning to calculate a moisture amount trapped by the low temperature nitrogen oxides trapping catalyst based on the operation condition (S4, S23, S28), and activate the moisture removal mechanism (5, 6, 19, 19A, 19B, 22, 23, 24, 25, 26, 27, 28, 29, 30, 30A, 30B, 40A, 40B) when the moisture amount reaches a predetermined amount (S6, S7, S25, S30, S42, S48, S61).

**5.** The exhaust gas purification device as defined in Claim 3 or Claim 4, wherein the moisture removal mechanism (5, 6, 19, 19A, 19B, 22, 23, 24, 25, 26, 27, 28, 29, 30, 30A, 30B, 40A, 40B) comprises a spark plug (6) which ignites fuel in the engine (1), and a controller (7) functioning to retard an ignition timing of the spark plug (6) to remove moisture from the low temperature nitrogen oxides trapping catalyst (S7).

**6.** The exhaust gas purification device as defined in any one of Claim 3 through 5, wherein the moisture removal mechanism (5, 6, 19, 19A, 19B, 22, 23, 24, 25, 26, 27, 28, 29, 30, 30A, 30B, 40A, 40B) further comprises a fuel injector (5) which supplies fuel into the engine (1) and the controller (7) is further functioning to reduce a fuel injection amount of the fuel injector (5) to remove moisture from the low temperature nitrogen oxides trapping catalyst (S7).

**7.** The exhaust gas purification device as defined in any one of Claim 3 through 6, wherein the device further comprises a bypass passage (32) which bypasses the nitrogen oxides trapping catalytic converter (14) and a switching valve (17) which selectively introduces exhaust gas in the exhaust passage (12) into the bypass passage (32) and the nitrogen oxides trapping catalytic converter (14).

**8.** The exhaust gas purification device as defined in any one of Claim 3 through 7, wherein the device further comprises a plurality of nitrogen oxides trapping catalytic converters (14A, 14B) disposed in parallel and a switching valve (17) which selectively connects the nitrogen oxides trapping catalytic converters (14A, 14B) to the exhaust passage (12).

**9.** The exhaust gas purification device as defined in Claim 8, wherein the device further comprises a controller (7) functioning to apply a moisture removal mechanism (19A, 19B, 40A, 40B) to the low temperature nitrogen oxides trapping catalyst of the nitrogen oxides trapping catalytic converter (14A, 14B) which is not connected to the exhaust passage (12).

**10.** The exhaust gas purification device as defined in any one of Claim 3 through 9, wherein the moisture removal mechanism (5, 6, 19, 19A, 19B, 22, 23, 24, 25, 26, 27, 28, 29, 30, 30A, 30B, 40A, 40B) comprises a heater (40, 40A, 40B) which heats the low temperature nitrogen oxides trapping catalyst.

**11.** The exhaust gas purification device as defined in any one of Claim 3 through 10, wherein the moisture removal mechanism (5, 6, 19, 19A, 19B, 22, 23, 24, 25, 26, 27, 28, 29, 30, 30A, 30B, 40A, 40B) comprises a secondary air supply passage (23, 25, 30, 30A, 30B) which supplies secondary air to the nitrogen oxides trapping catalytic converter (14).

**12.** The exhaust gas purification device as defined in Claim 11, wherein the moisture removal mechanism (5, 6, 19, 19A, 19B, 22, 23, 24, 25, 26, 27, 28, 29, 30, 30A, 30B, 40A, 40B) further comprises a fuel injector (5) which supplies fuel into the engine (1) and a controller (7) functioning to increase a fuel injection amount of the fuel injector (5) when the secondary air supply passage (23) supplies secondary air to the nitrogen oxides trapping catalytic converter (14) (S61).

**13.** The exhaust gas purification device as defined in Claim 11, wherein the moisture removal mechanism (5, 6, 19, 19A, 19B, 22, 23, 24, 25, 26, 27, 28, 29, 30, 30A, 30B, 40A, 40B) further comprises a heater (26, 29) which heats air in the secondary air supply passage (23, 25, 30, 30A, 30B).

**14.** The exhaust gas purification device as defined in any one of Claim 11 through 13, wherein the moisture removal mechanism (5, 6, 19, 19A, 19B, 22, 23, 24, 25, 26, 27, 28, 29, 30, 30A, 30B, 40A, 40B) further comprises a drier (28) which dries air in the secondary air supply passage (23, 25, 30, 30A, 30B).

**15.** The exhaust gas purification device as defined in any one of Claim 3 through 14, wherein the controller (7) is further functioning to stop an operation of the moisture removal mechanism (5, 6, 19, 19A, 19B, 22, 23, 24, 25, 26, 27, 28, 29, 30, 30A, 30B, 40A, 40B) after a predetermined time has elapsed after the moisture removal mechanism (5, 6, 19, 19A, 19B, 22, 23, 24, 25, 26, 27, 28, 29, 30, 30A, 30B, 40A, 40B) has been activated (S11, S12, S45, S46, S51, S52, S65, S66).

**16.** The exhaust gas purification device as defined in any one of Claim 1 through 15, wherein the low temperature nitrogen oxides trapping catalyst is a zeolite catalyst.

**17.** The exhaust gas purification device as defined in any one of Claim 1 through 15, wherein the low temperature nitrogen oxides trapping catalyst is a catalyst consisting of noble metal and ceria which supports the noble metal, and coated on a substrate.

FIG. 1A

FIG. 1B

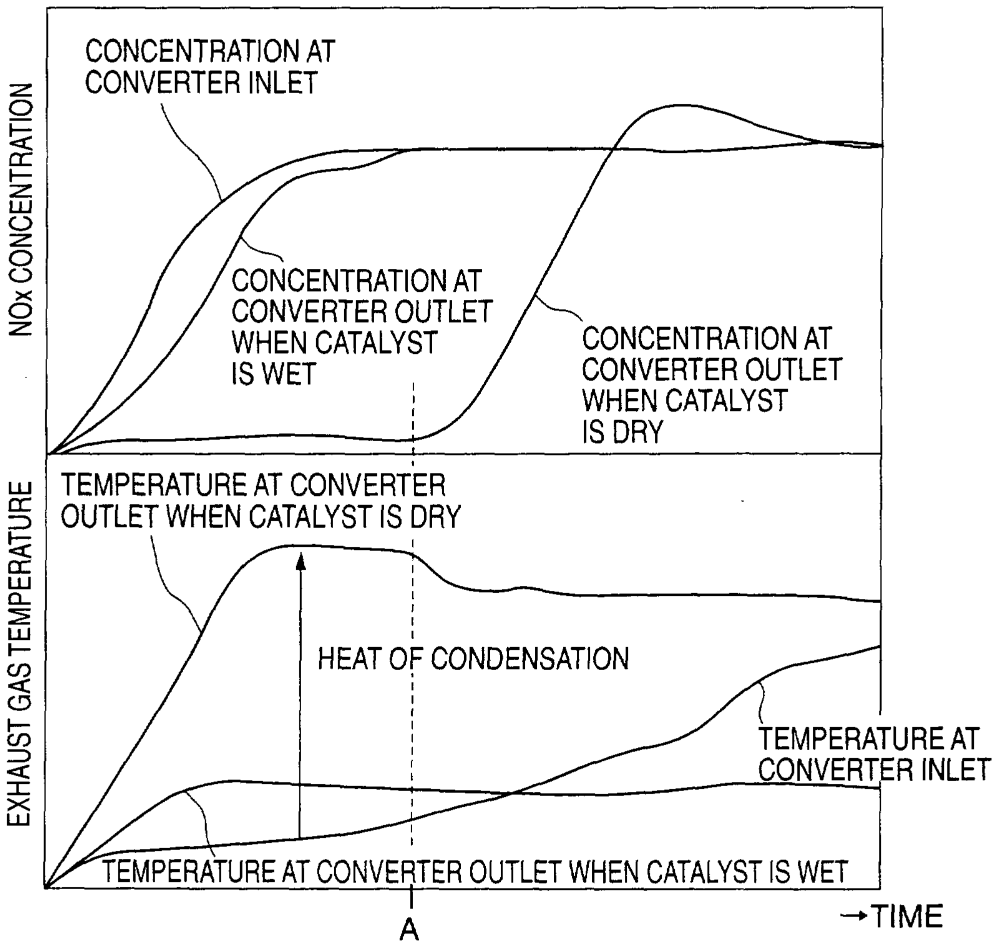
NOx CONCENTRATION
CONCENTRATION AT CONVERTER INLET
CONCENTRATION AT CONVERTER OUTLET WHEN CATALYST IS WET
CONCENTRATION AT CONVERTER OUTLET WHEN CATALYST IS DRY
EXHAUST GAS TEMPERATURE
TEMPERATURE AT CONVERTER OUTLET WHEN CATALYST IS DRY
HEAT OF CONDENSATION
TEMPERATURE AT CONVERTER INLET
TEMPERATURE AT CONVERTER OUTLET WHEN CATALYST IS WET
A
→TIME

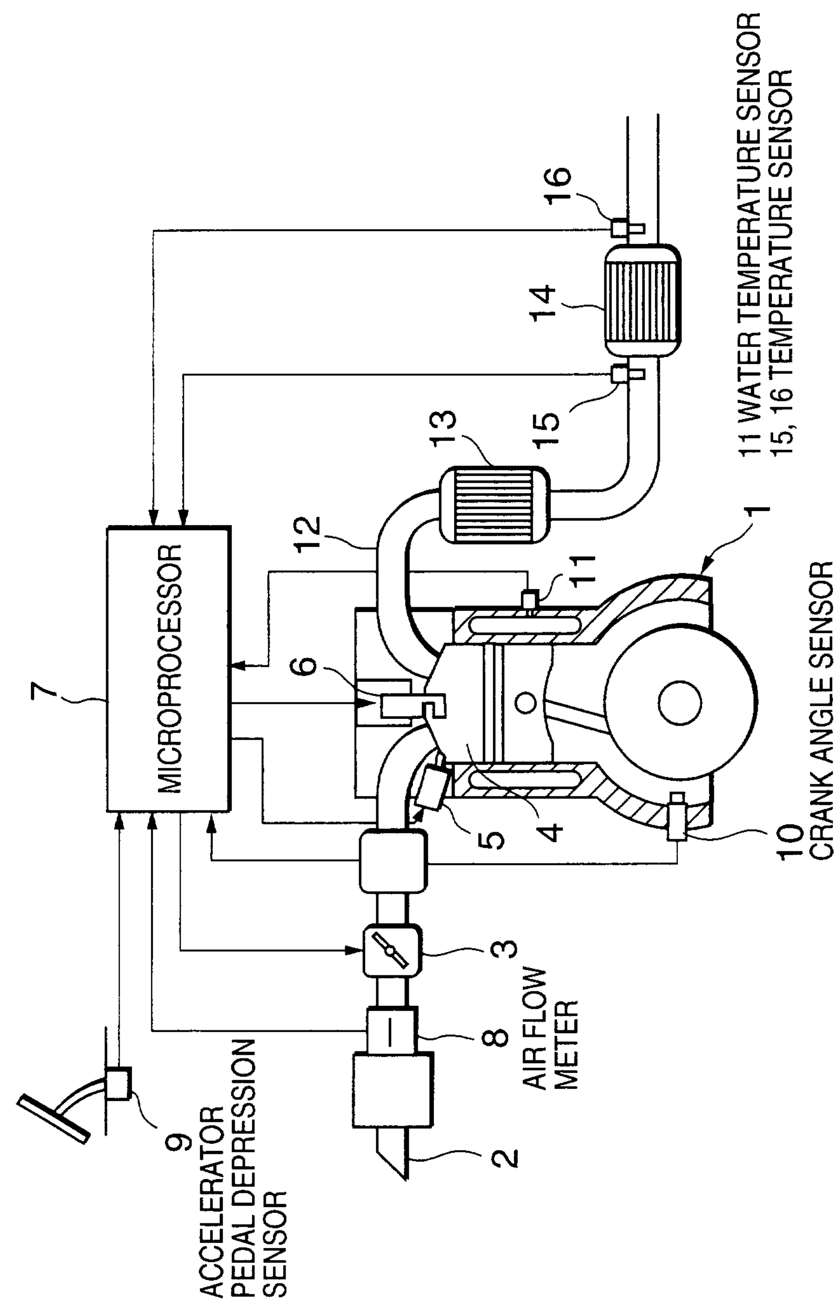
MICROPROCESSOR
7
6
12
13
14
15
16
11
1
5
4
10
CRANK ANGLE SENSOR
3
8
AIR FLOW METER
2
9
ACCELERATOR PEDAL DEPRESSION SENSOR
11 WATER TEMPERATURE SENSOR
15, 16 TEMPERATURE SENSOR

FIG. 2

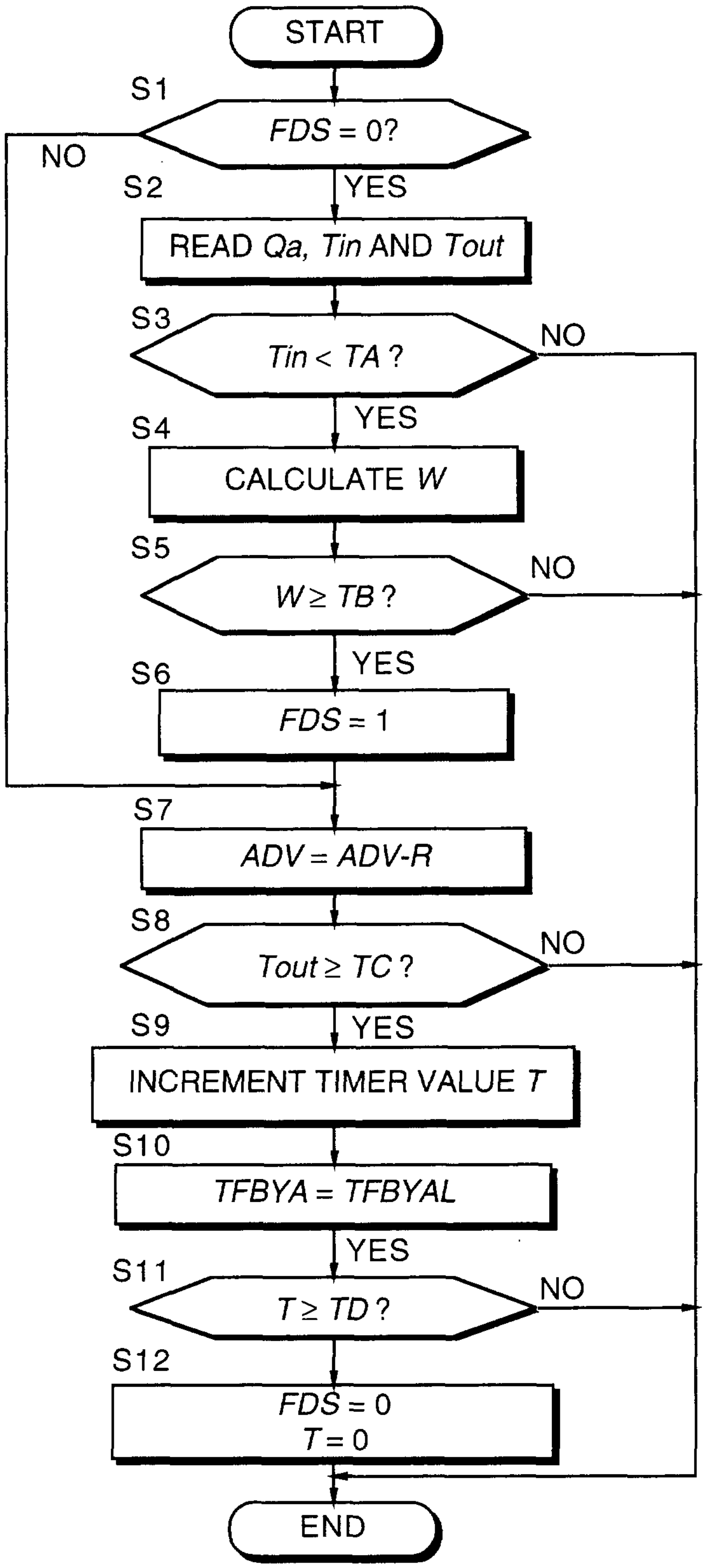
START
S1
FDS = 0?
NO
S2
YES
READ Qa, Tin AND Tout
S3
Tin < TA ?
NO
S4
YES
CALCULATE W
S5
W ≥ TB ?
NO
S6
YES
FDS = 1
S7
ADV = ADV-R
S8
Tout ≥ TC ?
NO
S9
YES
INCREMENT TIMER VALUE T
S10
TFBYA = TFBYAL
YES
S11
T ≥ TD ?
NO
S12
FDS = 0
T = 0
END

FIG. 3

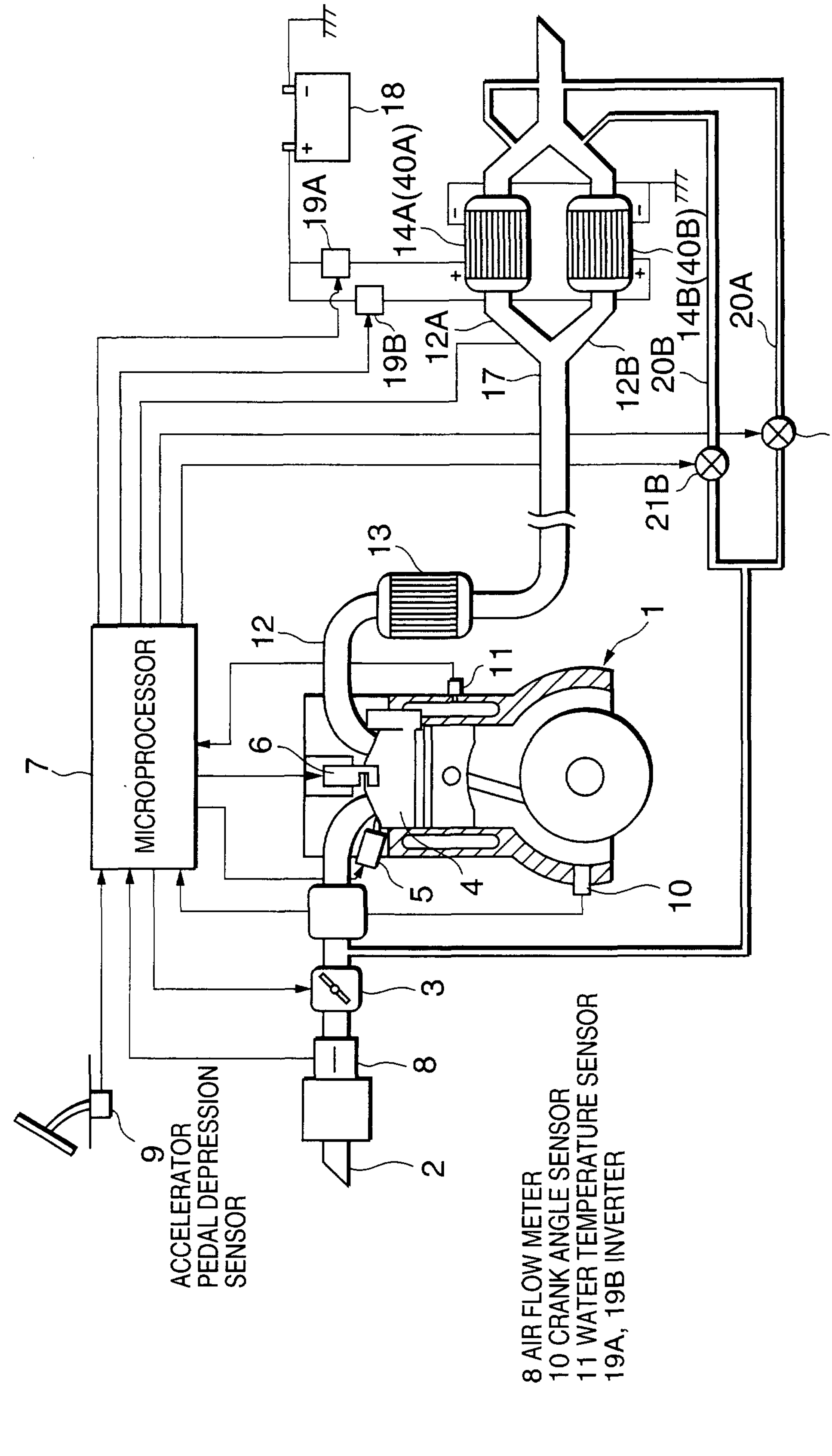
18
19A
14A(40A)
19B
12A
17
12B
20B
14B(40B)
20A
21A
21B
13
12
11
1
7
MICROPROCESSOR
6
5
4
10
3
8
9
2
ACCELERATOR PEDAL DEPRESSION SENSOR
8 AIR FLOW METER
10 CRANK ANGLE SENSOR
11 WATER TEMPERATURE SENSOR
19A, 19B INVERTER

FIG. 4

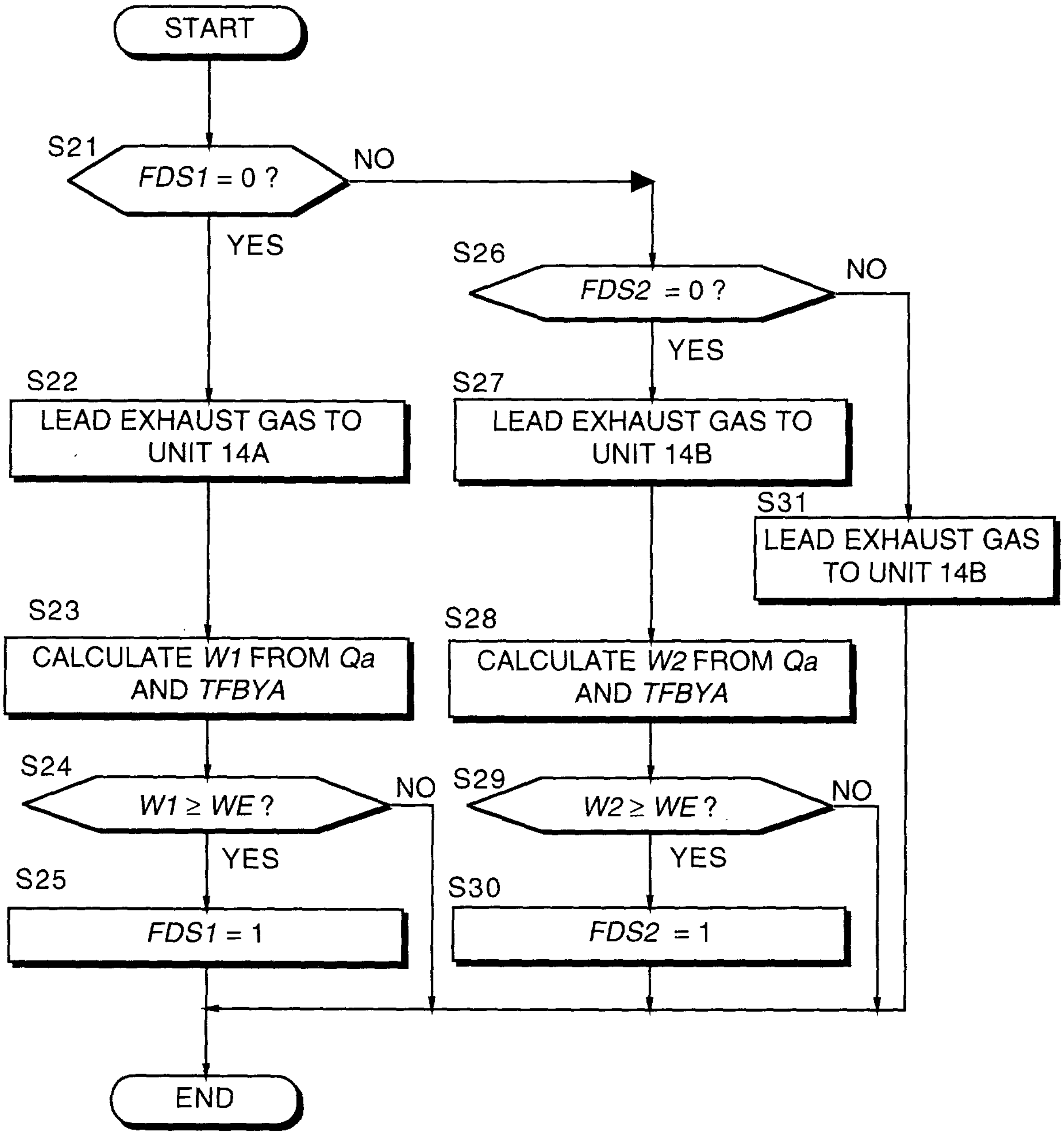
START
S21
FDS1 = 0 ?
NO
YES
S26
FDS2 = 0 ?
NO
YES
S22
LEAD EXHAUST GAS TO UNIT 14A
S27
LEAD EXHAUST GAS TO UNIT 14B
S31
LEAD EXHAUST GAS TO UNIT 14B
S23
CALCULATE W1 FROM Qa AND TFBYA
S28
CALCULATE W2 FROM Qa AND TFBYA
S24
W1 ≥ WE ?
NO
S29
W2 ≥ WE ?
NO
YES
YES
S25
FDS1 = 1
S30
FDS2 = 1
END

FIG. 5

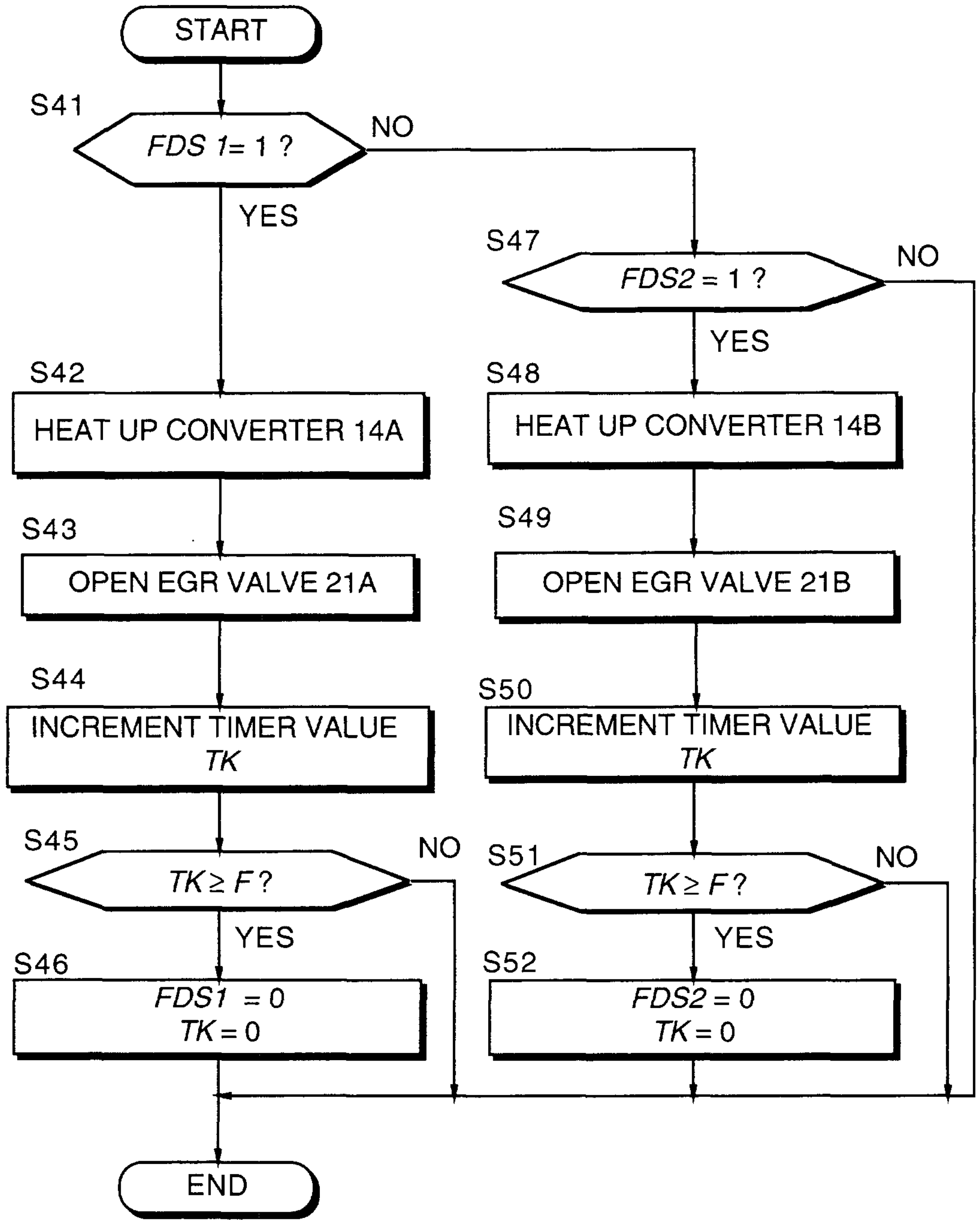
START
S41
FDS 1= 1 ?
NO
YES
S47
FDS2 = 1 ?
NO
YES
S42
HEAT UP CONVERTER 14A
S48
HEAT UP CONVERTER 14B
S43
OPEN EGR VALVE 21A
S49
OPEN EGR VALVE 21B
S44
INCREMENT TIMER VALUE TK
S50
INCREMENT TIMER VALUE TK
S45
TK ≥ F ?
NO
S51
TK ≥ F ?
NO
YES
YES
S46
FDS1 = 0
TK = 0
S52
FDS2 = 0
TK = 0
END

FIG. 6

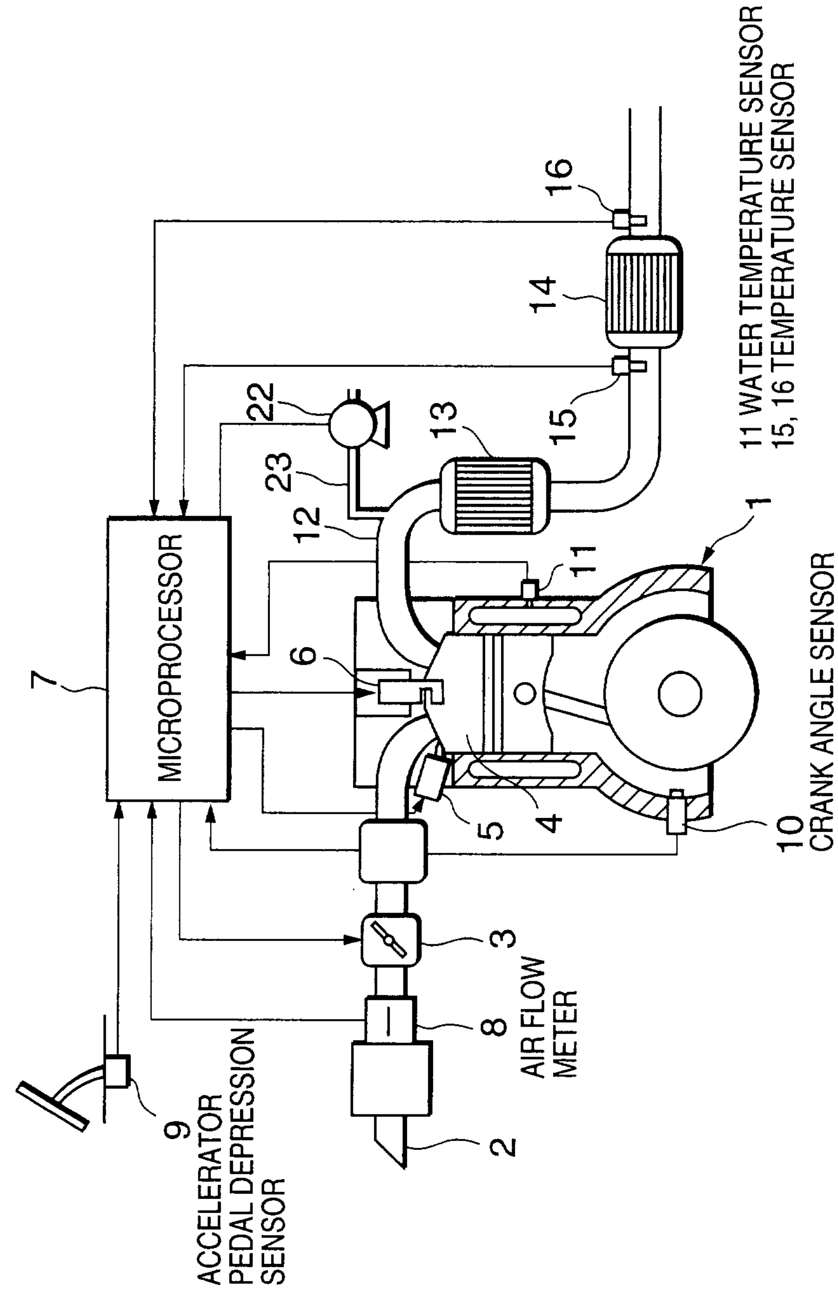
MICROPROCESSOR
ACCELERATOR PEDAL DEPRESSION SENSOR
AIR FLOW METER
CRANK ANGLE SENSOR
11 WATER TEMPERATURE SENSOR
15, 16 TEMPERATURE SENSOR
1
2
3
4
5
6
7
8
9
10
11
12
13
14
15
16
22
23

FIG. 7

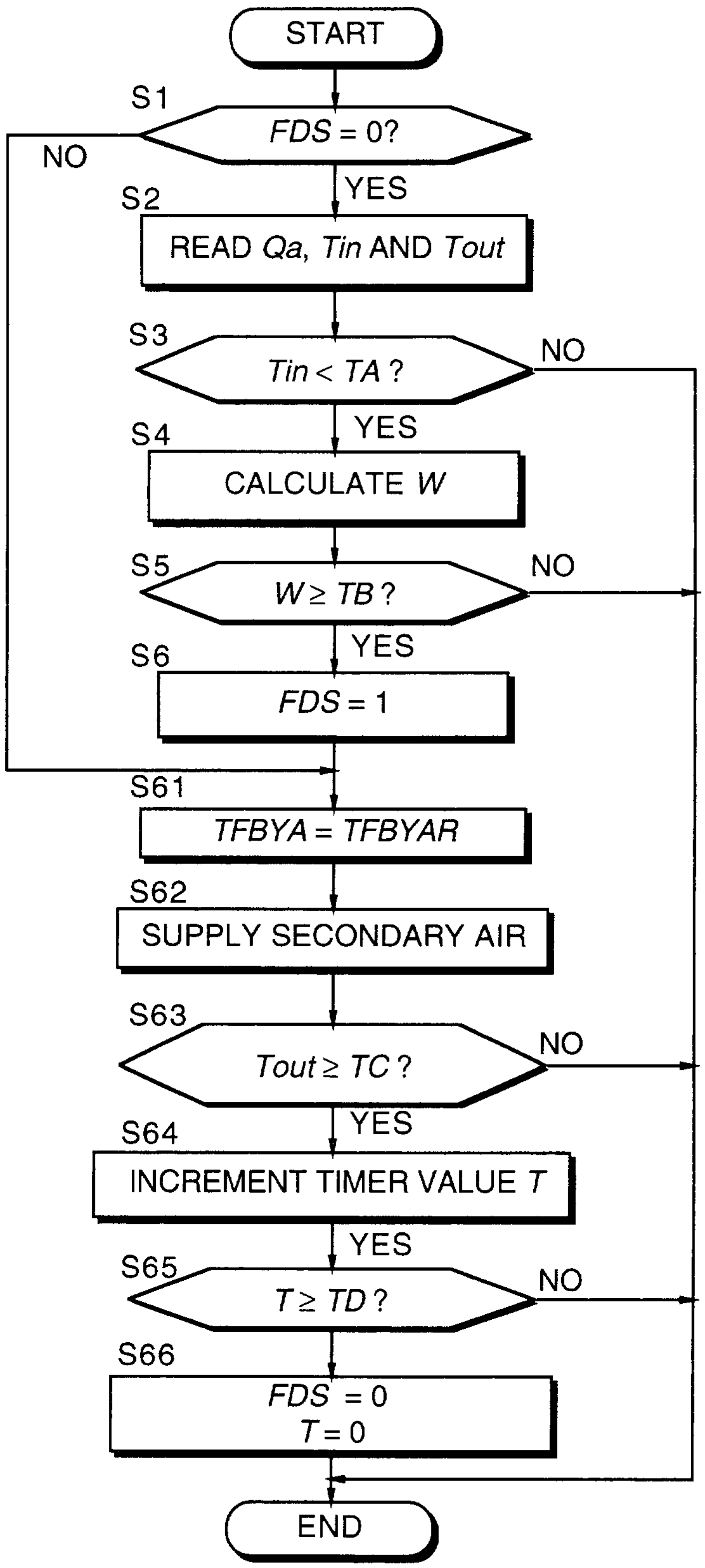
START
S1
FDS = 0?
NO
YES
S2
READ Qa, Tin AND Tout
S3
Tin < TA ?
NO
S4
YES
CALCULATE W
S5
W ≥ TB ?
NO
S6
YES
FDS = 1
S61
TFBYA = TFBYAR
S62
SUPPLY SECONDARY AIR
S63
Tout ≥ TC ?
NO
S64
YES
INCREMENT TIMER VALUE T
YES
S65
T ≥ TD ?
NO
S66
FDS = 0
T = 0
END

FIG. 8

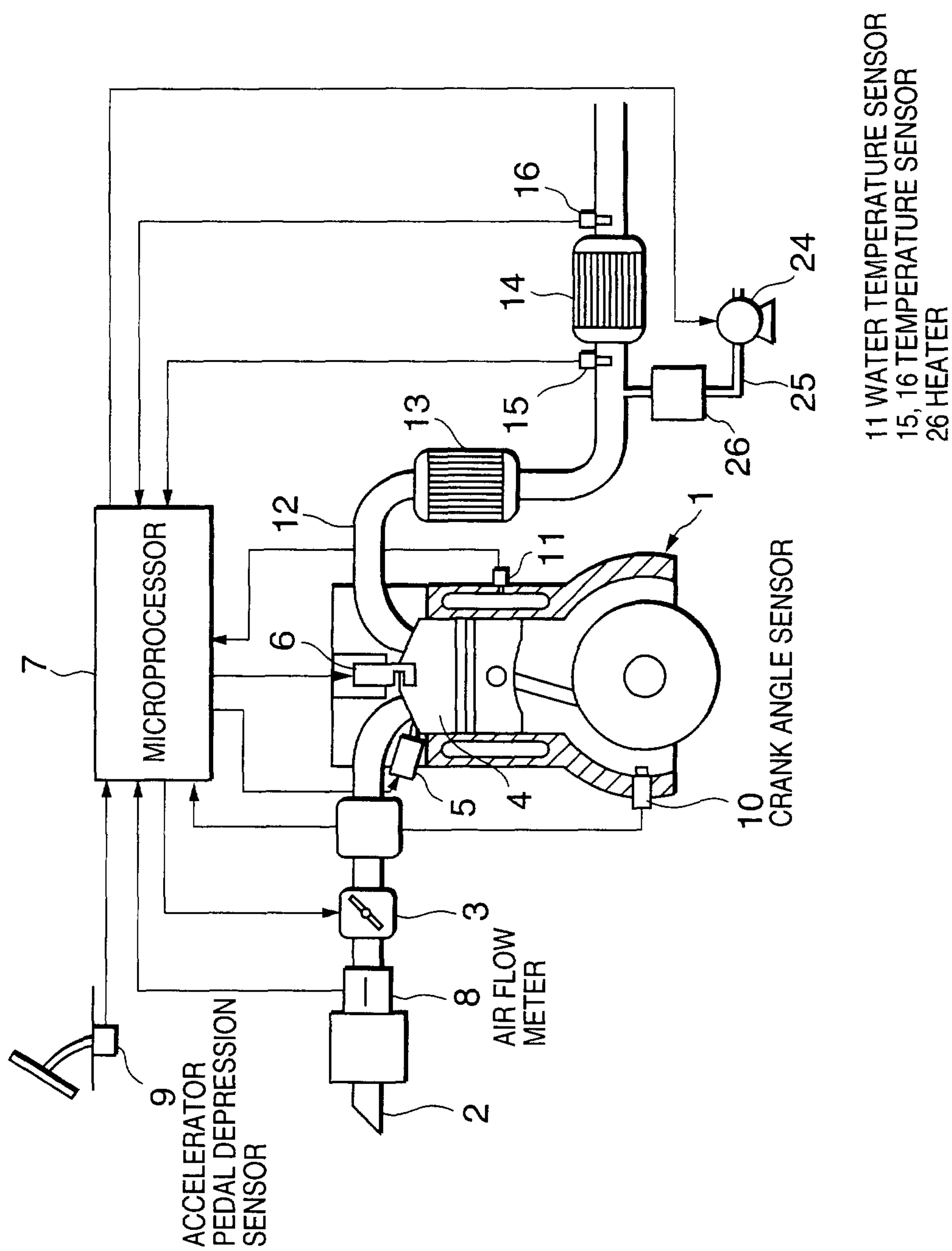
7
MICROPROCESSOR
6
12
13
15
14
16
24
25
26
11
1
CRANK ANGLE SENSOR
10
5
4
3
8
AIR FLOW
METER
2
9
ACCELERATOR
PEDAL DEPRESSION
SENSOR
11 WATER TEMPERATURE SENSOR
15, 16 TEMPERATURE SENSOR
26 HEATER

FIG. 9

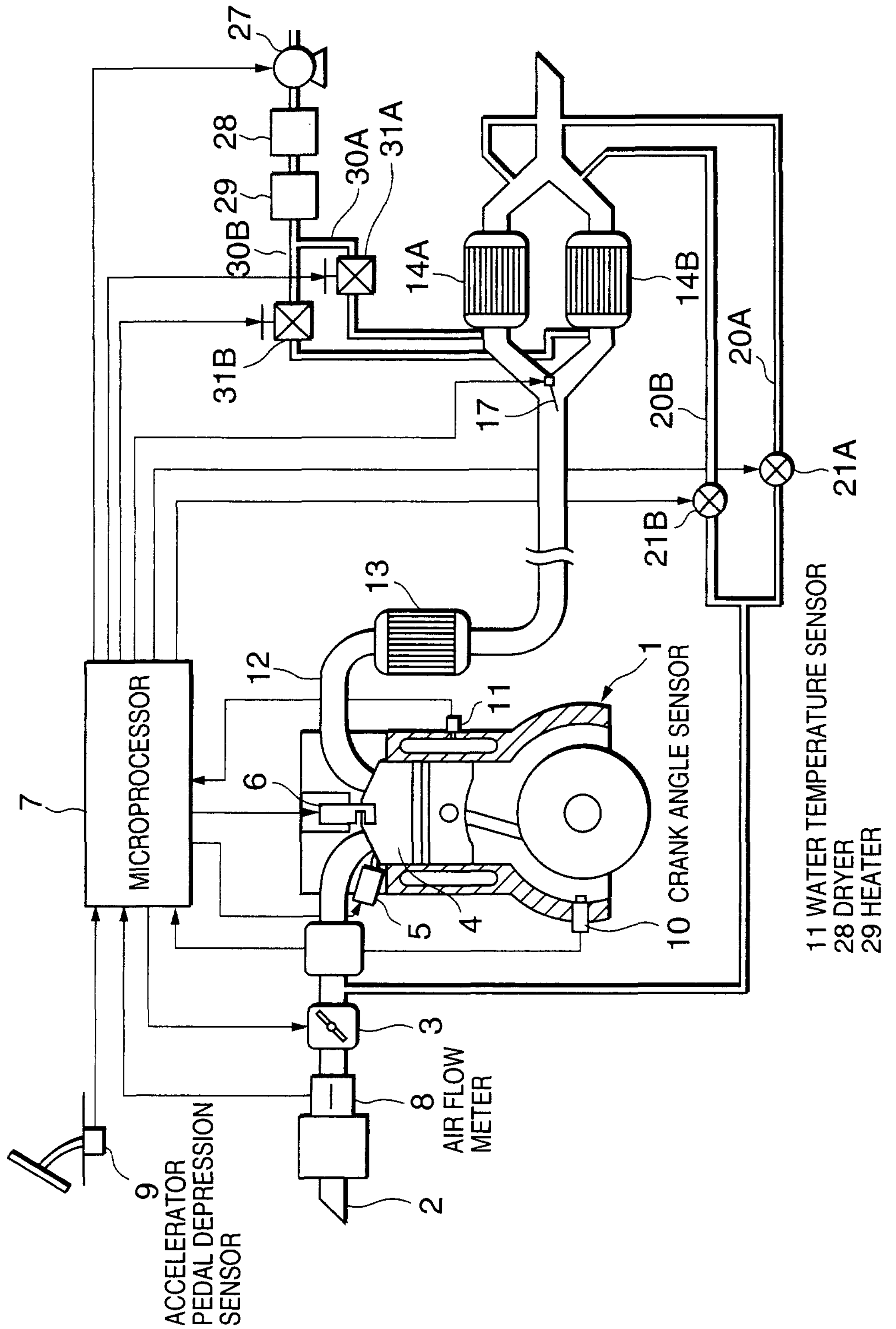
27
28
29
30A
31A
30B
31B
14A
14B
17
20A
20B
21A
21B
13
12
11
7
MICROPROCESSOR
6
5
4
1
10 CRANK ANGLE SENSOR
3
8
AIR FLOW METER
2
9
ACCELERATOR PEDAL DEPRESSION SENSOR
11 WATER TEMPERATURE SENSOR
28 DRYER
29 HEATER

FIG. 10

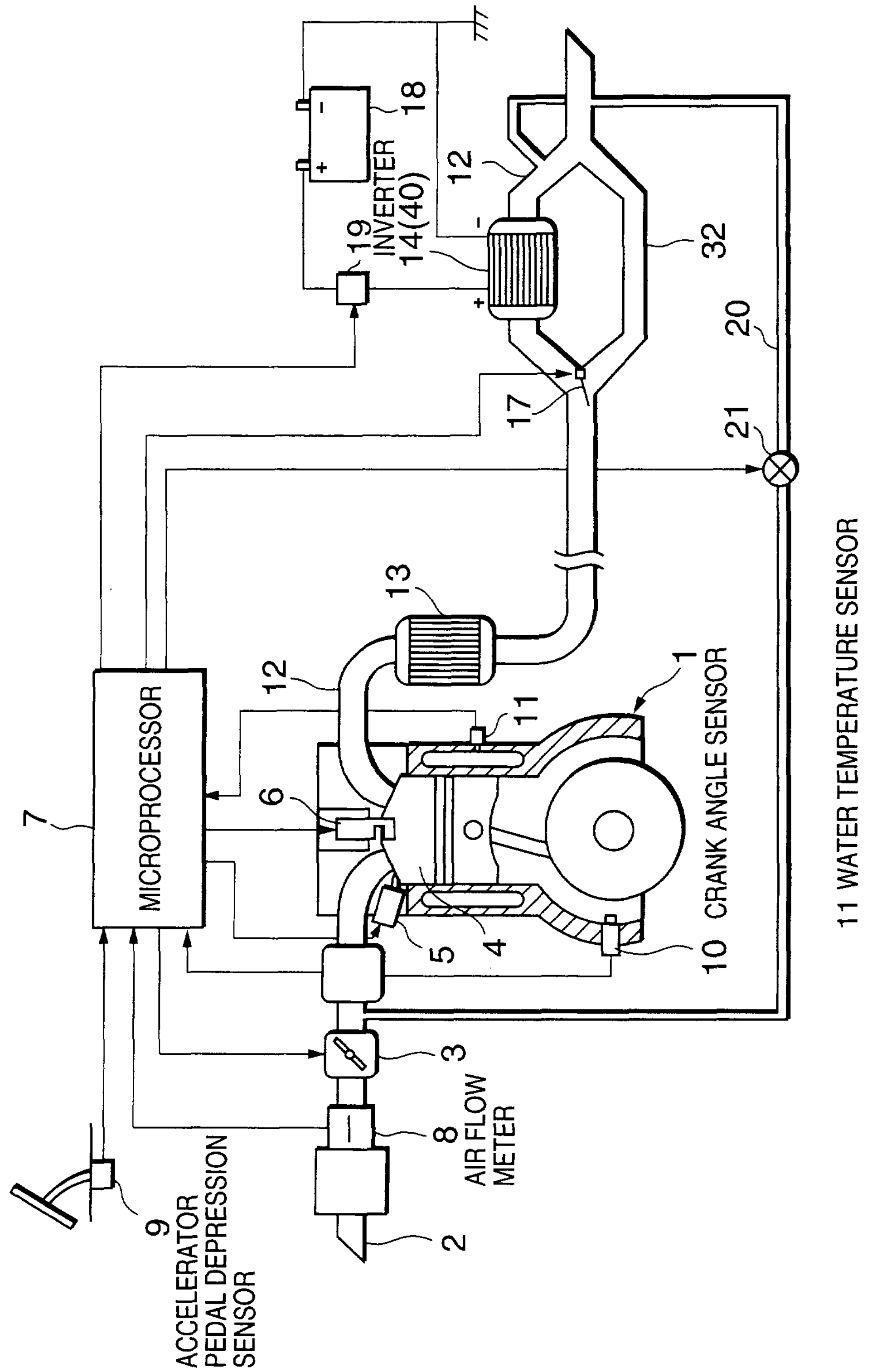
7
MICROPROCESSOR
19
INVERTER
14(40)
18
12
32
20
21
17
13
12
11
1
6
5
4
10
CRANK ANGLE SENSOR
3
8
AIR FLOW
METER
2
9
ACCELERATOR
PEDAL DEPRESSION
SENSOR
11 WATER TEMPERATURE SENSOR

FIG. 11

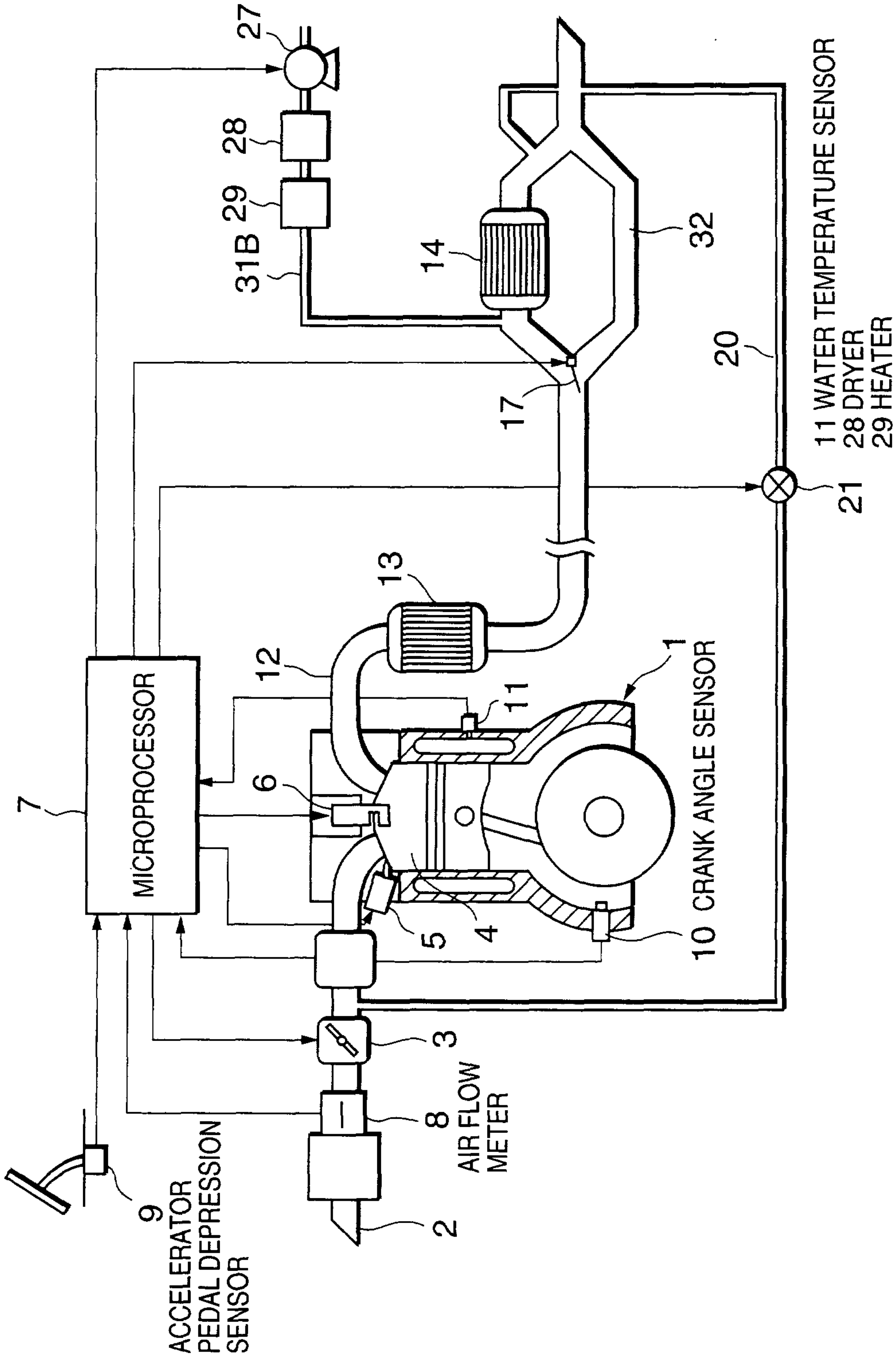
27
28
29
31B
14
32
WATER TEMPERATURE SENSOR
11 WATER TEMPERATURE SENSOR
28 DRYER
29 HEATER
20
17
21
13
12
1
11
CRANK ANGLE SENSOR
7
MICROPROCESSOR
6
5
4
10 CRANK ANGLE SENSOR
3
8
AIR FLOW METER
9
ACCELERATOR PEDAL DEPRESSION SENSOR
2

FIG. 12

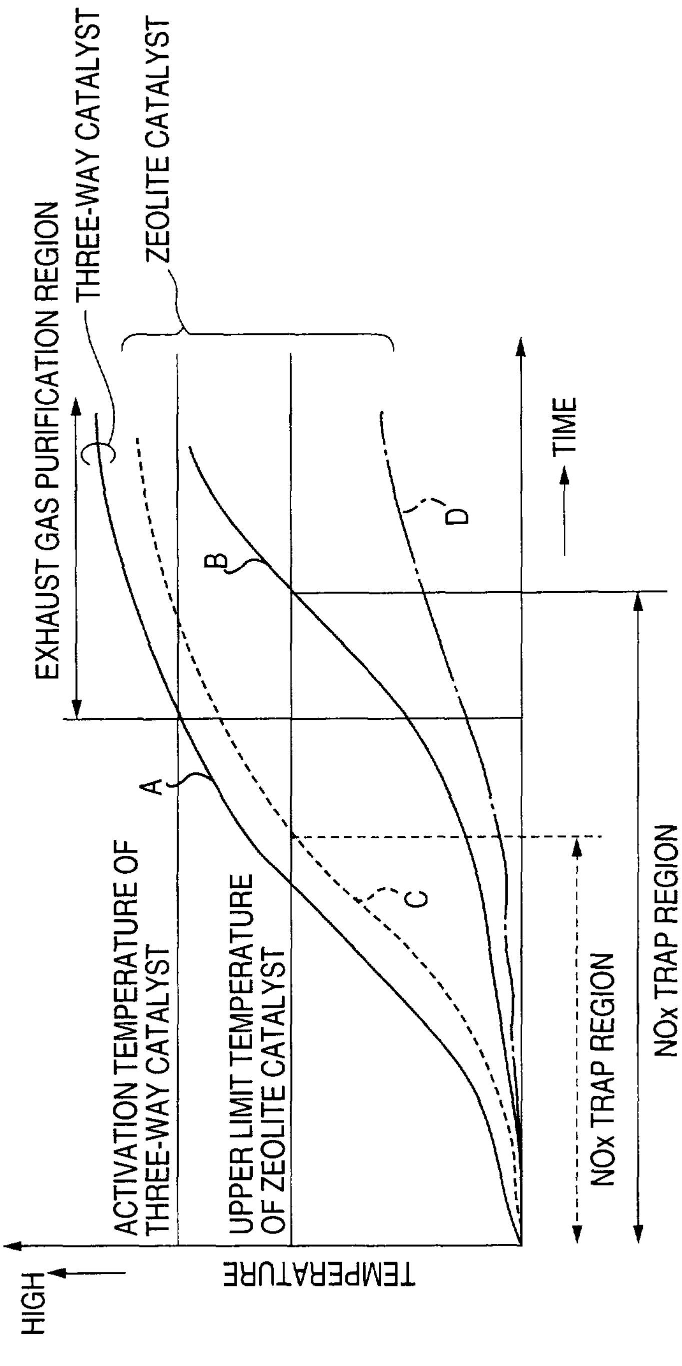
EXHAUST GAS PURIFICATION REGION
THREE-WAY CATALYST
ZEOLITE CATALYST
ACTIVATION TEMPERATURE OF THREE-WAY CATALYST
UPPER LIMIT TEMPERATURE OF ZEOLITE CATALYST
A
B
C
D
TIME
HIGH
TEMPERATURE
NOx TRAP REGION
NOx TRAP REGION

FIG. 13

FIG. 14A

FIG. 14B